# EUROPÄISCHE PATENTANMELDUNG

(11) **EP 4 024 694 A1**
(43) Veröffentlichungstag der Anmeldung: **06.07.2022**
(21) Anmeldenummer: 20217899.2
(22) Anmeldetag: 30.12.2020
(51) Int. Cl.: H02M 7/483

(54) **FLYING CAPACITOR MODUL UND MULTILEVEL-UMRICHTER**

(71) Anmelder: Siemens Aktiengesellschaft, 80333 München (DE)
(72) Erfinder: Hartwig, Raphael, 92342 Freystadt (DE); Hensler, Alexander, 91466 Gerhardshofen (DE)

(57) **Zusammenfassung**

Die Erfindung betrifft ein Flying Capacitor Modul (1), aufweisend eine Eingangsschaltung (3) mit einem ersten und zweiten Halbleiter (4,5), einer ersten Schalteinheit (6) und einem ersten und zweiten Kondensator (7,8) und eine Ausgangsschaltung (9) mit einem dritten und vierten Halbleiter (10, 11), einer zweiten Schalteinheit (12) und einem dritten und vierten Kondensator (13, 14), wobei der erste Halbleiter (4) zwischen einem ersten und zweiten Anschluss (15, 16) und der zweite Halbleiter (5) zwischen einem dritten und vierten Anschluss (17, 18) verbunden ist, der erste Kondensator (7) zwischen dem ersten Anschluss (15) und einem ersten Mittelabgriff (19) und der zweite Kondensator (8) zwischen dem ersten Mittelabgriff (19) und dem dritten Anschluss (17) verbunden ist, die erste Schalteinheit (6) zwischen dem ersten Mittelabgriff (19) und einem fünften Anschluss (20) verbunden ist, der dritte Halbleiter (10) zwischen einem sechsten und siebten Anschluss (21,22) und der vierte Halbleiter (11) zwischen dem siebten und einem achten Anschluss (22,23) verbunden ist, der dritte Kondensator (13) zwischen dem sechsten Anschluss (21) und einem zweiten Mittelabgriff (24) und der vierte Kondensator (14) zwischen dem zweiten Mittelabgriff (24) und dem achten Anschluss (23) verbunden ist, die zweite Schalteinheit (12) zwischen dem zweiten Mittelabgriff (24) und dem siebten Anschluss (22) verbunden ist und der zweite mit dem sechsten Anschluss (16,21), der vierte mit dem achten Anschluss (16, 23) und der fünfte Anschluss (20) mit dem zweiten Mittelabgriff (24) verbunden ist. Die Erfindung betrifft weiterhin einen Multilevel-Umrichter (2) mit dem Flying Capacitor Modul (1) .

## Beschreibung

Die Erfindung betrifft ein Flying Capacitor Modul und einen Multilevel-Umrichter mit dem Flying Capacitor Modul.

Multilevel-Umrichter kommen insbesondere im industriellen Umfeld der Antriebstechnik aber auch im Bereich der Energieversorgung dann zum Einsatz, wenn neben einer gefordert hohen Ausgangswechselspannungen für die Umrichter auch eine hohe Qualität der sinusförmigen Ausgangswechselspannungen bei einem geringem Aufwand an Filtern beansprucht wird.

Insbesondere mittels eines Modularen Multilevel-Umrichters (MMC) mit einer als Flying Capacitor (FC) ausgebildeten Umrichterstruktur wird einer begrenzten Sperrspannungsfähigkeit von handelsüblichen Halbleitern bzw. Leistungshalbleitern begegnet und so deren wirtschaftlicher Einsatz für Umrichter mit den genannten Anforderungen ermöglicht. Halbleiter mit einer hohen Sperrspannung verursachen bekannterweise neben den hohen Beschaffungskosten und ggf. Bereitstellungsproblemen auch hohe Durchlassverluste, was diese Halbleiter elektrisch oftmals ineffizient betreibbar macht.

Die Flying Capacitor Topologie hat demnach das Potential, das Gesamtvolumen der für den Umrichter und den Filter benötigten Bauteile in Bezug auf die genannten Anforderungen zu reduzieren. Allerdings ist für den Einsatz mittels der herkömmlichen Flying Capacitor Topologie immer noch eine hohe Anzahl an Halbleiterschaltern und Kondensatoren (Flying Capacitors) vorgesehen.

Mit Hilfe der Weiterentwickelung der Flying Capacitor Topologie hin zur T-type Flying Capacitor Topologie kann die Anzahl der Halbleiter, insbesondere bei Verwendung von bidirektionalen Halbleiterschaltungen mit bidirektionalen Halbleitern, grundsätzlich reduziert werden. Auch das resultierende energetische Volumen der verwendeten Kondensatoren kann reduziert werden.

Bekannt sind aber derartige Topologien von T-type Flying Capacitor Modulen, ob einphasig oder mehrphasig, nur mit der Bereitstellung von drei Spannungslevel für die Ausgangswechselspannung des Multilevel-Umrichters.

Drei Spannungslevel, welche mittels der obigen T-type Topologie von Flying Capacitor Modulen erzeugbar sind, entsprechen jedoch kaum den Anforderungen an eine qualitativ hochwertige sinusförmige Ausgangswechselspannung bzw. an eine hohe Skalierbarkeit der Ausgangswechselspannung, so dass die Hersteller von Multilevel-Umrichtern oftmals eher herkömmliche Flying Capacitor Topologien einsetzen, ohne die Vorteile der T-type Flying Capacitor Topologie entsprechend nutzen zu können.

Die mittels herkömmlicher Flying Capacitor Topologien erreichbaren höheren Spannungslevel, wie z.B. fünf, sieben oder neun Spannungslevel, können so nur mit einem entsprechend hohen Aufwand an Halbleiterschaltern und einem hohen Energievolumen der eingesetzten Kondensatoren erzielt werden.

Der Erfindung liegt daher die Aufgabe zugrunde, ein Flying Capacitor Modul für einen Multilevel-Umrichter in der Ausprägung einer T-type Flying Capacitor Topologie mit mindestens fünf oder mehr Spannungslevel für eine Ausgangswechselspannung des Flying Capacitor Moduls bereitzustellen.

Die Aufgabe wird durch ein Flying Capacitor Modul mit den in Anspruch 1 angegebenen Merkmalen und durch einen Multilevel-Umrichter mit den in Anspruch 11 angegebenen Merkmalen gelöst.

Für die Lösung der Aufgabe wird ein Flying Capacitor Modul für einen Multilevel-Umrichter vorgeschlagen, aufweisend eine Eingangsschaltung mit einem ersten und zweiten Halbleiter, einer ersten Schalteinheit und einem ersten und zweiten Kondensator und eine Ausgangsschaltung mit einem dritten und vierten Halbleiter, einer zweiten Schalteinheit und einem dritten und vierten Kondensator, wobei der erste Halbleiter zwischen einem ersten und zweiten Anschluss und der zweite Halbleiter zwischen einem dritten und vierten Anschluss verbunden ist, wobei der erste Kondensator zwischen dem ersten Anschluss und einem ersten Mittelabgriff und der zweite Kondensator zwischen dem ersten Mittelabgriff und dem dritten Anschluss verbunden ist, wobei die erste Schalteinheit zwischen dem ersten Mittelabgriff und einem fünften Anschluss verbunden ist, wobei der dritte Halbleiter zwischen einem sechsten und siebten Anschluss und der vierte Halbleiter zwischen dem siebten und einem achten Anschluss verbunden ist, wobei der dritte Kondensator zwischen dem sechsten Anschluss und einem zweiten Mittelabgriff und der vierte Kondensator zwischen dem zweiten Mittelabgriff und dem achten Anschluss verbunden ist, wobei die zweite Schalteinheit zwischen dem zweiten Mittelabgriff und dem siebten Anschluss verbunden ist und wobei der zweite mit dem sechsten Anschluss, der vierte mit dem achten Anschluss und der fünfte Anschluss mit dem zweiten Mittelabgriff verbunden ist.

Das mittels der T-type Flying Capacitor Topologie strukturierte Flying Capacitor Modul erlaubt nunmehr in vorteilhafter Art die Bereitstellung von zumindest fünf Spannungslevel an dem siebten Anschluss des Flying Capacitor Moduls. Der modulare Aufbau des vorgeschlagenen Flying Capacitor Moduls in Form von miteinander verbindbaren Schaltungen, wie hier zumindest der Eingangsschaltung und der Ausgangsschaltung, lässt grundsätzlich einen flexiblen Aufbau zu, welcher Spielraum für die Erzeugung von weiteren Spannungslevel größer Fünf zulässt.

In vorteilhafter Weise wird hier die Erweiterung der Schaltungen durch potenzielle Einfügungen (Erweiterungen) zwischen den jeweils beiden Verbindungen (zweiter mit sechstem Anschluss, vierter mit achtem Anschluss und fünfter Anschluss mit zweitem Mittelabgriff) ermöglicht.

Die Verbindung des zweiten mit dem sechsten Anschluss, des vierten mit dem achten Anschluss und des fünften Anschluss mit dem zweiten Mittelabgriff umfasst jedoch auch die Ausbildung als eine jeweils monolithische Verbindung der jeweiligen Anschlusspaare (zweiter mit sechstem Anschluss, vierter mit achtem Anschluss und fünfter Anschluss mit zweitem Mittelabgriff), wobei die Mittelabgriffe auch im Sinne von Anschlüssen zu verstehen sind.

Die Halbleiter der Eingangsschaltung und der Ausgangsschaltung sind vorzugsweise Leistungshalbleiter.

Vorteilhafte Ausgestaltungsformen der Abtrennvorrichtung sind in den abhängigen Ansprüchen angegeben.

Bei einer ersten vorteilhaften Ausgestaltungsform weist das Flying Capacitor Modul mindestens eine weitere Schaltung mit einem neunten und zehnten Halbleiter, einer dritten Schalteinheit und einem fünften und sechsten Kondensator auf, wobei der neunte Halbleiter zwischen einem neunten und zehnten Anschluss und der zehnte Halbleiter zwischen einem elften und zwölften Anschluss verbunden ist, wobei der fünfte Kondensator zwischen dem neunten Anschluss und einem dritten Mittelabgriff und der sechste Kondensator zwischen dem dritten Mittelabgriff und dem elften Anschluss verbunden ist, wobei die dritte Schalteinheit zwischen dem dritten Mittelabgriff und einem dreizehnten Anschluss verbunden ist, und wobei die mindestens eine weitere Schaltung zwischen der Eingangsschaltung und der Ausgangsschaltung verbunden ist.

Der Einschub von der zumindest einen weiteren Schaltung zwischen Eingangsschaltung und Ausgangsschaltung ertüchtigt das so kaskadierbare Flying Capacitor Modul in vorteilhafter Art, mindestens sieben Spannungslevel an dem siebten Anschluss zu erzeugen. Neben der einen weiteren Schaltung sind auch andere weitere Schaltungen zwischen Eingangsschaltung und Ausgangsschaltung verbindbar, so dass in einer Folge von ungraden Zahlen auch Spannungslevel größer Sieben, wie neun, elf, dreizehn und entsprechend weitere Spannungslevel am siebten Anschluss erzeugbar sind.

Die Halbleiter der weiteren Schaltung sind vorzugsweise Leistungshalbleiter.

Bei einer weiteren vorteilhaften Ausgestaltungsform des Flying Capacitor Moduls sind die Halbleiter der Eingangsschaltung, die Halbleiter der Ausgangsschaltung und, falls vorhanden, die Halbleiter der mindestens einen weiteren Schaltung schaltbar.

Die Schaltbarkeit der genannten Halbleiter ermöglicht in vorteilhafter Weise sowohl einen Energiefluss von dem ersten und dritten Anschluss der Eingangsschaltung (DC-Anschluss) hin zu dem siebten Anschluss der Ausgangsschaltung (AC-Anschluss), insbesondere für einen einspeisenden Einsatz des Flying Capacitor Moduls, wie auch von dem siebten Anschluss der Ausgangsschaltung (AC-Anschluss) hin zu dem ersten und dritten Anschluss der Eingangsschaltung (DC-Anschluss), insbesondere für einen rückspeisenden Einsatz des Flying Capacitor Moduls.

Die schaltbaren Halbleiter der Schaltung sind vorzugsweise schaltbare Leistungshalbleiter.

Bei einer weiteren vorteilhaften Ausgestaltungsform des Flying Capacitor Moduls sind die schaltbaren Halbleiter IGBTs oder MOSFETs und insbesondere als GaN- oder SiC-Halbleiter ausgebildet.

GAN- oder SiC-Halbleiter als Halbleiter mit breitem Bandabstand haben gegenüber Si-Halbleitern den Vorteil, geringere Schalt- und Leitungsverluste zu erzeugen, was sie energieeffizient einsetzbar macht. Sie können, im Gegensatz zu Si-Halbleitern, schneller geschaltet werden, beanspruchen einen kleineren Bauraum als Si-Halbleiter, sind zwischenzeitlich auch kostengünstig herstellbar und somit für den Massenmarkt attraktiv.

Bei einer weiteren vorteilhaften Ausgestaltungsform des Flying Capacitor Moduls sind die Halbleiter der Eingangsschaltung, die Halbleiter der Ausgangsschaltung und, falls vorhanden, die Halbleiter der mindestens einen weiteren Schaltung als Dioden ausgebildet.

Diese als Dioden ausgebildeten Halbleiter sind vorzugsweise Leistungshalbleiter. Sie sind nicht schaltbar im Sinne von schaltbaren Halbleitern, wie beispielsweise IGBTs oder MOSFETs. Ein Energiefluss von dem siebten Anschluss der Ausgangsschaltung (AC-Anschluss) hin zu dem ersten und dritten Anschluss der Eingangsschaltung (DC-Anschluss), für einen rückspeisenden Einsatz des Flying Capacitor Moduls, ist mittels dieser Dioden demnach nicht möglich, jedoch für spezifische Anwendung ggf. auch nicht nötig.

Ein Flying Capacitor Modul, welches mittels dieser Dioden betrieben wird, ist in vorteilhafter Weise kostengünstig herstellbar und auch aufwandsarm betreibbar (keine Ansteuerung im Sinne von Ansteuersignalen für die Dioden notwendig).

Bei einer weiteren vorteilhaften Ausgestaltungsform des Flying Capacitor Moduls weisen die erste Schalteinheit, die zweite Schalteinheit und, falls vorhanden, die dritte Schalteinheit jeweils zwei in Reihe verschaltete schaltbare Halbleiter auf, mittels derer die Schalteinheiten bidirektional betreibbar sind.

Mittels der in Reihe verschalteten Halbleiter kann ein Energiefluss (Stromfluss) der Schalteinheiten vorteilhaft in zwei Richtungen erfolgen, beispielsweise vom ersten Mittelabgriff der Eingangsschaltung durch die erste Schalteinheit hin zum fünften Anschluss der Eingangsschaltung oder auch vom fünften Anschluss durch die erste Schalteinheit hin zum ersten Mittelabgriff.

Die in Reihe verschalteten Halbleiter der Schalteinheiten sind vorzugsweise Leistungshalbleiter.

Bei einer weiteren vorteilhaften Ausgestaltungsform des Flying Capacitor Moduls weisen die erste Schalteinheit, die zweite Schalteinheit und, falls vorhanden, die dritte Schalteinheit jeweils einen bidirektional schaltbaren monolithischen Halbleiter auf, mittels dem die Schalteinheiten bidirektional betreibbar sind.

Der bidirektional schaltende, monolithisch aufgebaute Halbleiter verinnerlicht eine bidirektionale Schaltfunktion von zwei in Reihe geschalteten Halbleitern und ermöglicht in vorteilhafter Weise eine Reduktion der eingesetzten Halbleiter.

Bei einer weiteren vorteilhaften Ausgestaltungsform des Flying Capacitor Moduls sind die bidirektional schaltbaren, monolithischen Halbleiter als GAN- oder SiC-Halbleiter ausgebildet. Bevorzugt kommen hier GAN-Halbleiter mit MIS Field Effect Schottky Tunnel Junction zum Einsatz.

Bei einer weiteren vorteilhaften Ausgestaltungsform des Flying Capacitor Moduls ist eine Gleichspannung am ersten und dritten Anschluss anlegbar und sind mittels der schaltbaren Halbleiter der ersten Schalteinheit, der schaltbaren Halbleiter der zweiten Schalteinheit, der Halbleiter der Eingangsschaltung und der Halbleiter der Ausgangsschaltung auf Basis der Gleichspannung zumindest fünf Spannungslevel für eine Wechselspannung an dem siebten Anschluss erzeugbar.

Bei einer weiteren vorteilhaften Ausgestaltungsform des Flying Capacitor Moduls ist die maximale Sperrspannung über den Halbleitern der ersten Schalteinheit, über den Halbleitern der zweiten Schalteinheit und, falls vorhanden, über den Halbleitern der dritten Schalteinheit jeweils nur halb so groß ausgelegt, wie die maximale Sperrspannung über den Halbleitern der Eingangsschaltung, über den Halbleitern der Ausgangsschaltung und, falls vorhanden, über den Halbleitern der mindestens einen weiteren Schaltung.

Somit können für den Einsatz der Halbleiter in den Schalteinheiten in vorteilhafter Weise Halbleiter zum Einsatz kommen, deren Sperrspannungen gegenüber den verbliebenen Halbleitern der Eingangsschaltung, der Ausgangsschaltung und der mindestens einen weiteren Schaltung deutlich reduziert sind, somit kostengünstiger sind und weniger elektrische Verluste erzeugen.

Für die Lösung der Aufgabe wird weiterhin ein Multilevel-Umrichter zum Betrieb eines Energieerzeugers oder Energieverbrauchers an einem Versorgungsnetz mit einem erfindungsgemäßen Flying Capacitor Modul vorgeschlagen, wobei das Flying Capacitor Modul mit einer ersten und zweiten Gleichspannungsphase eines Gleichspannungskreises für die Gleichspannung und mit einer ersten Wechselspannungsphase eines Wechselspannungsnetzes für die Wechselspannung verbindbar ist und wobei das Flying Capacitor Modul über den Gleichspannungskreis mit dem Versorgungsnetz und über das Wechselspannungsnetz mit dem Energieerzeuger oder dem Energieverbraucher verbindbar ist.

Bei einer vorteilhaften Ausgestaltungsform des Multilevel-Umrichters sind zusätzlich ein zweites und drittes Flying Capacitor Modul jeweils als erfindungsgemäßes Flying Capacitor Modul ausgebildet, wobei das zweite und dritte Flying Capacitor Modul jeweils mit der ersten und zweiten Gleichspannungsphase des Gleichspannungskreises für die Gleichspannung verbindbar sind, wobei das zweite Flying Capacitor Modul mit einer zweiten Wechselspannungsphase und das dritte Flying Capacitor Modul mit einer dritten Wechselspannungsphase des Wechselspannungsnetzes für die Wechselspannung verbindbar ist und wobei das zweite und dritte Flying Capacitor Modul jeweils über den Gleichspannungskreis mit dem Versorgungsnetz und über das Wechselspannungsnetz mit dem Energieerzeuger oder dem Energieverbraucher verbindbar sind.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Es zeigt:
- FIG 1: eine schematische Darstellung eines bekannten Flying Capacitor Moduls für eine Erzeugung von fünf Spannungsleveln,
- FIG 2: eine erste schematische Darstellung des erfindungsgemäßen Flying Capacitor Moduls in T-type Topologie zur Erzeugung von fünf Spannungsleveln,
- FIG 3: ein Diagramm mit einer Darstellung einer sinusförmigen Wechselspannung, welche durch fünf Spannungslevel einer Gleichspannung mittels des erfindungsgemäßen Flying Capacitor Moduls nach FIG 2 oder mittels des bekannten Flying Capacitor Moduls nach FIG 1 erzeugbar ist,
- FIG 4: eine zweite schematische Darstellung des erfindungsgemäßen Flying Capacitor Moduls nach FIG 2 für die Erzeugung der fünf Spannungslevel,
- FIG 5: eine dritte schematische Darstellung des erfindungsgemäßen Flying Capacitor Moduls nach FIG 2 für die Erzeugung der fünf Spannungslevel,
- FIG 6: eine vierte schematische Darstellung des erfindungsgemäßen Flying Capacitor Moduls nach FIG 2 zur Erzeugung von sieben Spannungslevel, und
- FIG 7: eine schematische Darstellung eines erfindungsgemäßen Multilevel-Umrichters mit drei erfindungsgemäßen Flying Capacitor Modulen zum dreiphasigen Betrieb eines Energieerzeuger oder Energieverbrauchers mittels des Multilevel-Umrichters an einem Versorgungsnetz.

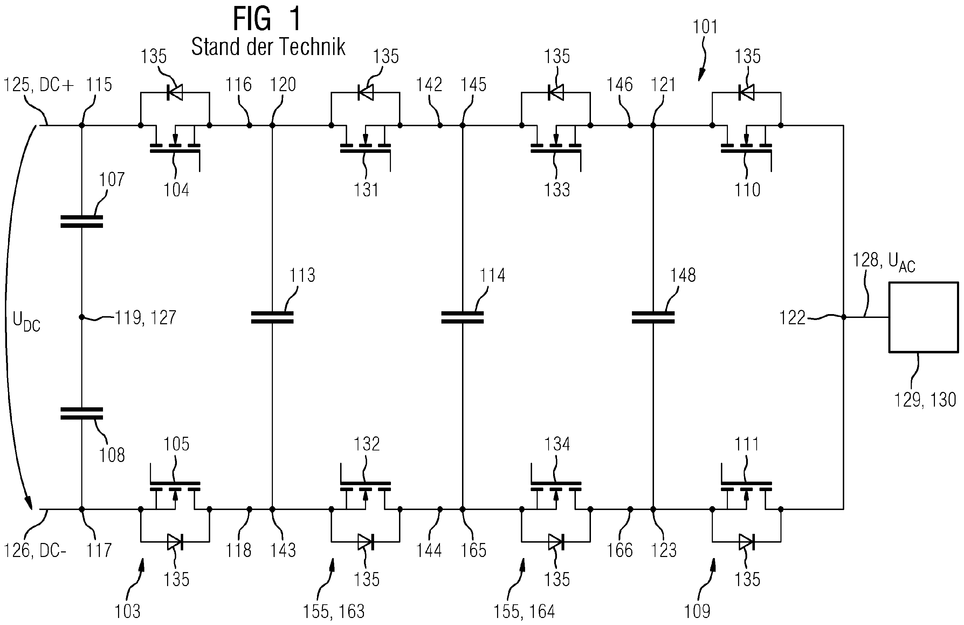

Die FIG 1 zeigt eine schematische Darstellung eines bekannten Flying Capacitor Moduls 101 für eine Erzeugung von fünf Spannungsleveln.

Dazu weist dieses bekannte Flying Capacitor Moduls 101 eine Eingangsschaltung 103 mit einem ersten und zweiten Halbleiter 104,105 und einem ersten und zweiten Kondensator 107,108, eine Ausgangsschaltung 109 mit einem dritten und vierten Halbleiter 110,111 und einem fünften Kondensator 148, eine erste weitere Schaltung 163 als weitere Schaltung 155 mit einem fünften und sechsten Halbleiter 131,132 und einem dritten Kondensator 113 sowie eine zweite weitere Schaltung 164 als weitere Schaltung 155 mit einem siebten und achten Halbleiter 133,134 und einem vierten Kondensator 114 auf.

Die Halbleiter 104,105,110,111,131,132,133,134 sind schaltbar als MOSFET ausgeführt, wobei jeder der schaltbaren Halbleiter 104,105,110,111,131,132,133,134 jeweils eine hier monolithisch integrierte antiparallele Diode 135 (auch body diode oder Freilaufdiode genannt) aufweist. Diese antiparallelen Dioden 135 werden beispielsweise für die Rückspeisung der elektrischen Energie benötigt.

Die Eingangsschaltung 103 ist derart verschaltet, dass der erste Halbleiter 104 zwischen einem ersten und zweiten Anschluss 115,116 und der zweite Halbleiter 105 zwischen einem dritten und vierten Anschluss 117,118 verbunden ist. Der erste Kondensator 107 ist zwischen dem ersten Anschluss 115 und einem ersten Mittelabgriff 119 und der zweite Kondensator 108 zwischen dem ersten Mittelabgriff 119 und dem dritten Anschluss 117 verbunden.

Die Ausgangsschaltung 109 ist derart verschaltet, dass der dritte Halbleiter 110 zwischen einem sechsten und siebten Anschluss 121,122 und der dritte Halbleiter 111 zwischen dem siebten und einem achten Anschluss 122,123 verbunden ist. Der fünfte Kondensator 148 ist zwischen dem sechsten und achten Anschluss 121,123 verbunden.

Die erste weitere Schaltung 163 als weitere Schaltung 155 ist derart verschaltet, dass der fünfte Halbleiter 131 zwischen einem fünften und neunten Anschluss 120,142 und der sechste Halbleiter 132 zwischen einem zehnten und elften Anschluss 143,144 verbunden ist. Der dritte Kondensator 113 ist zwischen dem fünften und zehnten Anschluss 120,143 verbunden.

Die zweite weitere Schaltung 164 als weitere Schaltung 155 ist derart verschaltet, dass der siebte Halbleiter 133 zwischen einem zwölften und dreizehnten Anschluss 145,146 und der achte Halbleiter 134 zwischen einem vierzehnten und fünfzehnten Anschluss 165,166 verbunden ist. Der vierte Kondensator 114 ist zwischen dem zwölften und vierzehnten Anschluss 145,165 verbunden.

Um eine kaskadierende Verbindung der einzelnen Schaltungen 103,109,163,164 herzustellen, ist die Eingangsschaltung 103 mit der ersten weiteren Schaltung 163 derart verschaltet, dass der zweite Anschluss 116 mit dem fünften Anschluss 120 und der vierte Anschluss 118 mit dem zehnten Anschluss 143 verbunden ist, ist die ersten weiteren Schaltung 163 mit der zweiten weiteren Schaltung 164 derart verschaltet, dass der neunte Anschluss 142 mit dem zwölften Anschluss 145 und der elfte Anschluss 144 mit dem vierzehnten Anschluss 165 verbunden ist und ist die zweite weitere Schaltung 164 mit der Ausgangsschaltung 109 derart verschaltet, dass dreizehnte Anschluss 146 mit dem sechsten Anschluss 121 und der fünfzehnte Anschluss 166 mit dem achten Anschluss 123 verbunden ist. Der erste Anschluss 115 der Eingangsschaltung 103 ist mit einem positiven Gleichspannungspotential DC+ einer ersten Gleichspannungsphase 125 eines Gleichspannungskreises und der dritte Anschluss 117 der Eingangsschaltung 103 ist mit einem negativen Gleichspannungspotential DC- einer zweiten Gleichspannungsphase 126 des Gleichspannungskreises verbunden. Über den Gleichspannungsphasen 125,126 liegt demnach am Flying Capacitor Modul 101 eine Gleichspannung U_{DC} an.

Der siebte Anschluss 122 der Ausgangsschaltung 109 ist mit einer ersten Wechselspannungsphase 128 eines Wechselspannungsnetzes verbunden, wobei an dem siebten Anschluss 122 eine sinusförmige Wechselspannung U_{AC} aus fünf Spannungslevel der Gleichspannung U_{DC} beim Betrieb des Flying Capacitor Moduls 101 erzeugbar ist. Mittels dieser Wechselspannung U_{AC} ist ein Energieerzeuger 129 oder Energieverbraucher 130 am Flying Capacitor Modul 101 betreibbar.

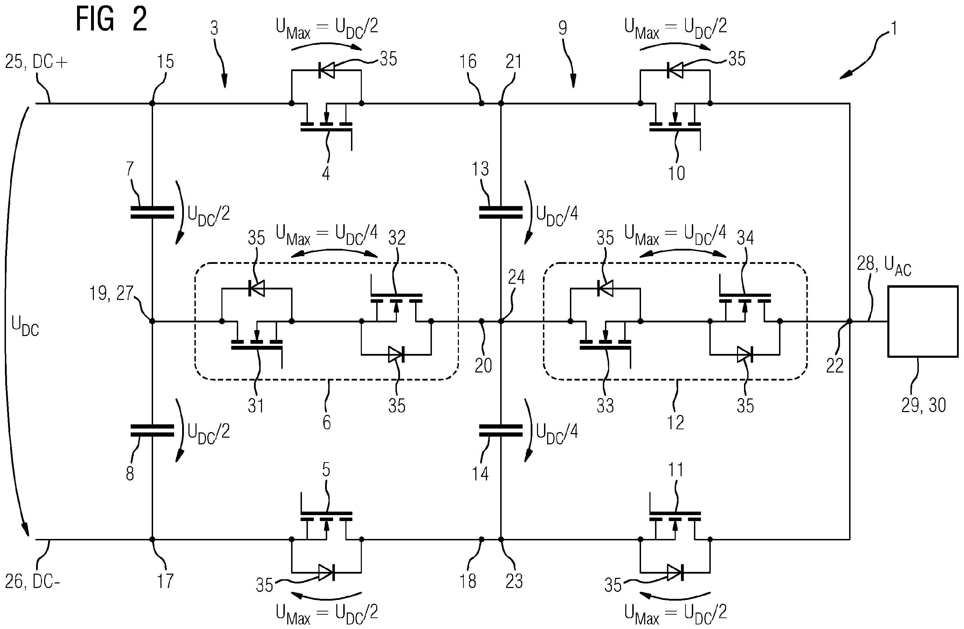

Mittels der FIG 2 wird eine erste schematische Darstellung des erfindungsgemäßen Flying Capacitor Moduls 1 in T-type Topologie zur Erzeugung von fünf Spannungslevel aufgezeigt.

Dazu weist das erfindungsgemäße Flying Capacitor Modul 1 eine Eingangsschaltung 3 mit einem ersten und zweiten schaltbaren Halbleiter 4,5 (hier MOSFETS), einer ersten Schalteinheit 6 und einem ersten und zweiten Kondensator 7,8 sowie eine Ausgangsschaltung 9 mit einem dritten und vierten schaltbaren Halbleiter 10,11 (hier MOSFETs), einer zweiten Schalteinheit 12 und einem dritten und vierten Kondensator 13,14 auf.

Die erste Schalteinheit 6 und die zweite Schalteinheit 12 umfassen jeweils zwei in Reihe verschaltete MOSFET als fünfte, sechste, siebte und achte schaltbare Halbleiter 31,32,33,34, mittels derer die beiden Schalteinheiten 6,12 bidirektional betreibbar sind.

Jeder der schaltbaren Halbleiter 4,5,10,11,31,32,33,34 weist eine hier monolithisch integrierte antiparallele Diode 35 (auch body diode oder Freilaufdiode genannt) auf. Diese antiparallelen Dioden 35 werden beispielsweise für die Rückspeisung der elektrischen Energie benötigt.

Die Eingangsschaltung 3 ist derart verschaltet, dass der erste Halbleiter 4 zwischen einem ersten und zweiten Anschluss 15,16 und der zweite Halbleiter 5 zwischen einem dritten und vierten Anschluss 17,18 verbunden ist, der erste Kondensator 7 zwischen dem ersten Anschluss 15 und einem ersten Mittelabgriff 19 verbunden ist und der zweite Kondensator 8 zwischen dem ersten Mittelabgriff 19 und dem dritten Anschluss 17 verbunden ist. Die erste Schalteinheit 6 der Eingangsschaltung 3 ist dazu zwischen dem ersten Mittelabgriff 19 und einem fünften Anschluss 20 verbunden.

Die Ausgangsschaltung 9 ist derart verschaltet, dass der dritte Halbleiter 10 zwischen einem sechsten und siebten Anschluss 21,22 und der vierte Halbleiter 11 zwischen dem siebten und einem achten Anschluss 22,23 verbunden ist, der dritte Kondensator 13 zwischen dem sechsten Anschluss 21 und einem zweiten Mittelabgriff 24 verbunden ist und der vierte Kondensator 14 zwischen dem zweiten Mittelabgriff 24 und dem achten Anschluss 23 verbunden ist. Die zweite Schalteinheit 12 der Ausgangsschaltung 9 ist dazu zwischen dem zweiten Mittelabgriff 24 und dem siebten Anschluss 22 verbunden.

Um eine kaskadierende Verbindung der Eingangsschaltung 3 mit der Ausgangsschaltung 9 herzustellen, ist der zweite mit dem sechsten Anschluss 16,21, der vierte mit dem achten Anschluss 18,23 und der fünfte Anschluss 20 mit dem zweiten Mittelabgriff 24 verbunden.

Der erste Anschluss 15 der Eingangsschaltung 3 ist mit einem positiven Gleichspannungspotential DC+ einer ersten Gleichspannungsphase 25 eines Gleichspannungskreises und der dritte Anschluss 17 der Eingangsschaltung 3 ist mit einem negativen Gleichspannungspotential DC- einer zweiten Gleichspannungsphase 26 des Gleichspannungskreises verbunden. Über den Gleichspannungsphasen 25,26 liegt am Flying Capacitor Modul 1 eine Gleichspannung U_{DC} an.

Der siebte Anschluss 22 der Ausgangsschaltung 9 ist mit einer ersten Wechselspannungsphase 28 eines Wechselspannungsnetzes verbunden, wobei an dem siebten Anschluss 22 eine sinusförmige Wechselspannung U_{AC} aus fünf Spannungslevel der Gleichspannung U_{DC} beim Betrieb des Flying Capacitor Moduls 1 erzeugbar ist. Mittels dieser Wechselspannung U_{AC} ist ein Energieerzeuger 29 oder Energieverbraucher 30 am Flying Capacitor Modul 1 betreibbar.

Über dem ersten und zweiten Kondensator 7,8 ist ein Spannungsabfall von maximal U_{DC}/2 vorgesehen, über dem dritten und vierten Kondensator 13,14 jedoch nur noch ein Spannungsabfall von maximal U_{DC}/4.

Während der erste, zweite, dritte und vierte schaltbare Halbleiter 4,5,10,11 der Eingangsschaltung 3 und Ausgangsschaltung 9 jeweils eine maximale Sperrspannung Uₘₐₓ von U_{DC}/2 aufweist, reduziert sich die maximale Sperrspannung Uₘₐₓ an dem fünften, sechsten, siebten und achten schaltbaren Halbleiter 31,32,33,34 der ersten und zweiten Schalteinheit 6,12 jeweils auf U_{DC}/4.

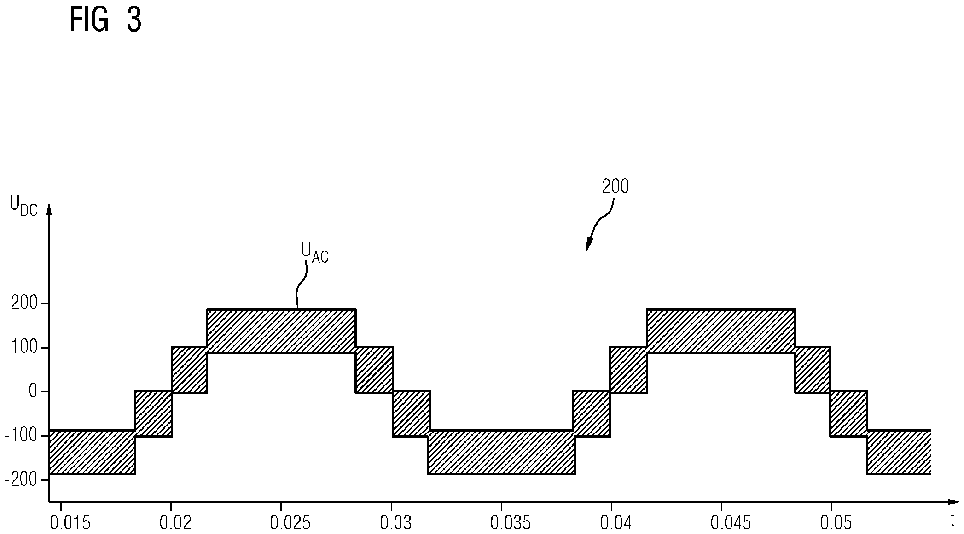

In der FIG 3 wird ein Diagramm 200 mit einer sinusförmigen Wechselspannung U_{AC} dargestellt, welche durch fünf Spannungslevel einer Gleichspannung U_{DC} mittels des erfindungsgemäßen Flying Capacitor Moduls nach FIG 2 und des bekannten Flying Capacitor Moduls nach FIG 1 erzeugbar ist.

Das Diagramm 200 zeigt dazu beispielhaft einen Spannungsbereich für die Gleichspannung U_{DC} von -200V bis 200V, wobei somit am erfindungsgemäßen Flying Capacitor Modul nach FIG 2 wie auch am bekannten Flying Capacitor Modul nach FIG 1 die Gleichspannung von U_{DC} = 400V anliegen kann. Zu sehen sind demnach die fünf Spannungslevel -200V, -100V, 0V, 100V und 200V der Gleichspannung U_{DC}, aus welchem sich über die Zeit t die sinusförmige Wechselspannung U_{AC} einstellt.

So kann beispielsweise ein Spannungslevel von -200V mittels des in FIG 2 dargestellten erfindungsgemäßen Flying Capacitor Moduls am siebten Anschluss erreicht werden, indem der zweite Halbleiter 5 der Eingangsschaltung 3 und der vierte Halbleiter 11 der Ausgangsschaltung 9 als schaltbare Halbleiter geschlossen sind (leiten) und der erste Halbleiter 4 der Eingangsschaltung 3 und der dritte Halbleiter 10 der Ausgangsschaltung 9 geöffnet sind (sperren). Die erste Schaltvorrichtung 6 der Eingangsschaltung 3 und die zweite Schaltvorrichtung 12 der Ausgangsschaltung 9 sind dazu ebenfalls geöffnet (sperren).

Ein Spannungslevel von 0V am siebenten Anschluss wird erreicht, indem nur die erste Schaltvorrichtung 6 der Eingangsschaltung 3 und die zweite Schaltvorrichtung 12 der Ausgangsschaltung 9 jeweils geschlossen sind (leiten), der erste und zweite Halbleiter 4,5 der Eingangsschaltung 3 und der dritte und vierte Halbleiter 10,11 der Ausgangsschaltung 9 jeweils geöffnet sind (sperren).

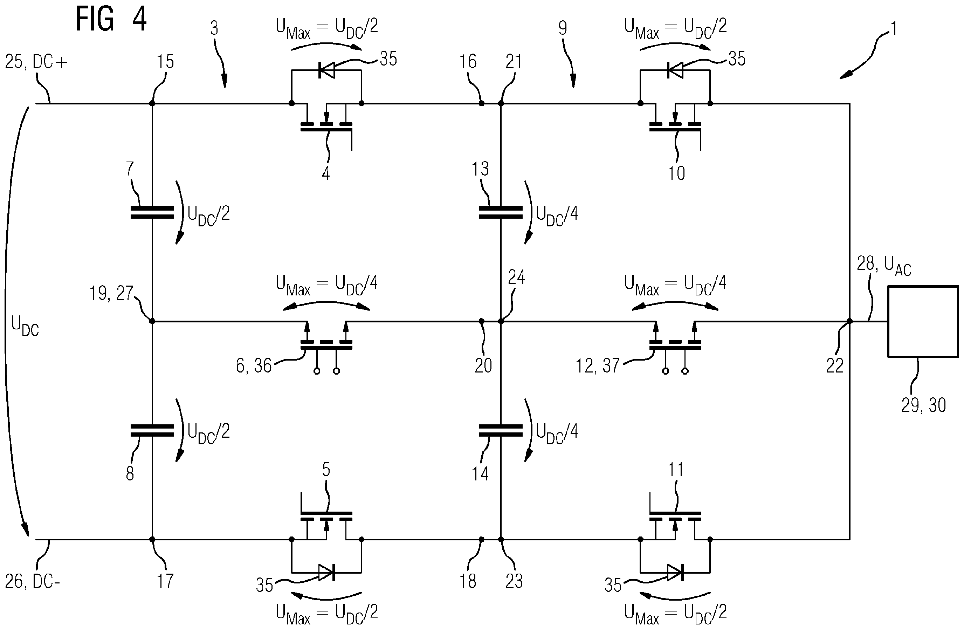

Die FIG 4 zeigt eine zweite schematische Darstellung des erfindungsgemäßen Flying Capacitor Moduls 1 nach FIG 2 für die Erzeugung der fünf Spannungslevel auf.

Dazu zeigt die FIG 4 in analoger Weise das Flying Capacitor Modul 1 gemäß FIG 2. Im Gegensatz zur Darstellung in FIG 2 weist die erste Schalteinheit 6 der FIG 4 einen ersten bidirektional schaltbaren, monolithischen Halbleiter 36 und die zweite Schalteinheit 12 der FIG 4 einen zweiten bidirektional schaltbaren, monolithischen Halbleiter 37 auf, mittels dem die Schalteinheiten 6,12 bidirektional betreibbar sind.

Die beiden bidirektional schaltbaren, monolithischen Halbleiter 36,37 sind hier beispielhaft als FET ausgebildet, wobei bevorzugt monolithische Halbleiter mit GaN oder SiC eingesetzt werden.

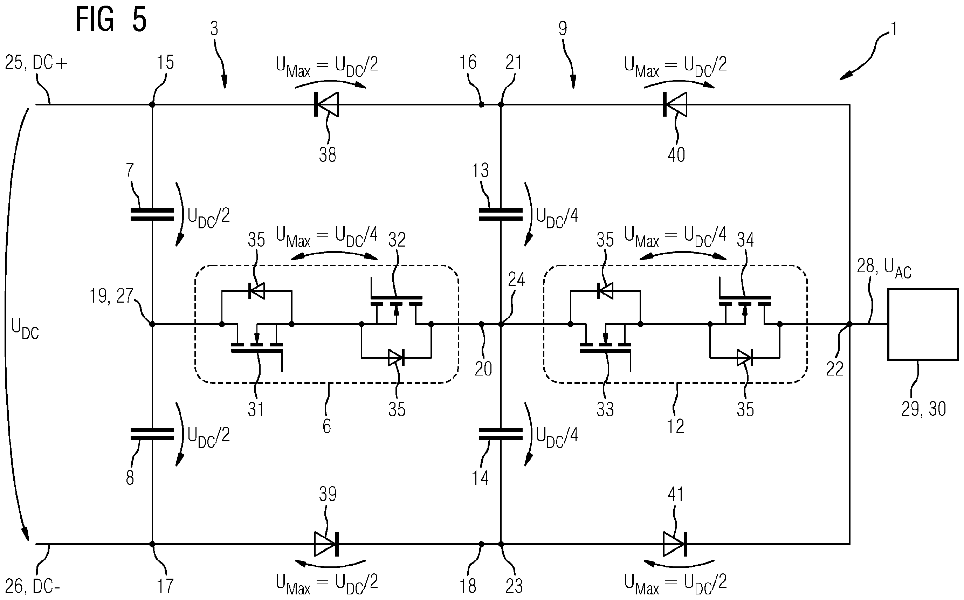

In FIG 5 wird mittels einer zweiten schematischen Darstellung das erfindungsgemäße Flying Capacitor Modul 1 nach FIG 2 für die Erzeugung der fünf Spannungslevel visualisiert.

Dazu zeigt die FIG 5 in analoger Weise das Flying Capacitor Modul 1 gemäß FIG 2. Im Gegensatz zur Darstellung in FIG 2 weist die FIG 5 als einen ersten, zweiten, dritten und vierten Halbleiter 4,5,10,11 der FIG 2 entsprechend eine erste, zweite, dritte und vierte Diode 38,39,40,41 auf.

Diese Dioden 38,39,40,41 sind vorzugsweise Leistungsdioden. Sie sind nicht schaltbar im Sinne von schaltbaren Halbleitern, wie beispielsweise IGBTs oder MOSFETs. Ein Energiefluss nach beispielsweise FIG 2 von dem siebten Anschluss 22 der Ausgangsschaltung 9 mit der im Betrieb des Flying Capacitor Moduls 1 anliegenden Wechselspannung U_{AC} hin zu dem ersten und dritten Anschluss 15,16 der Eingangsschaltung 3 mit der im Betrieb des Flying Capacitor Moduls 1 anliegenden Gleichspannung U_{DC} ist für einen rückspeisenden Einsatz des Flying Capacitor Moduls 1 mittels dieser Dioden 38,39,40,41 nicht möglich.

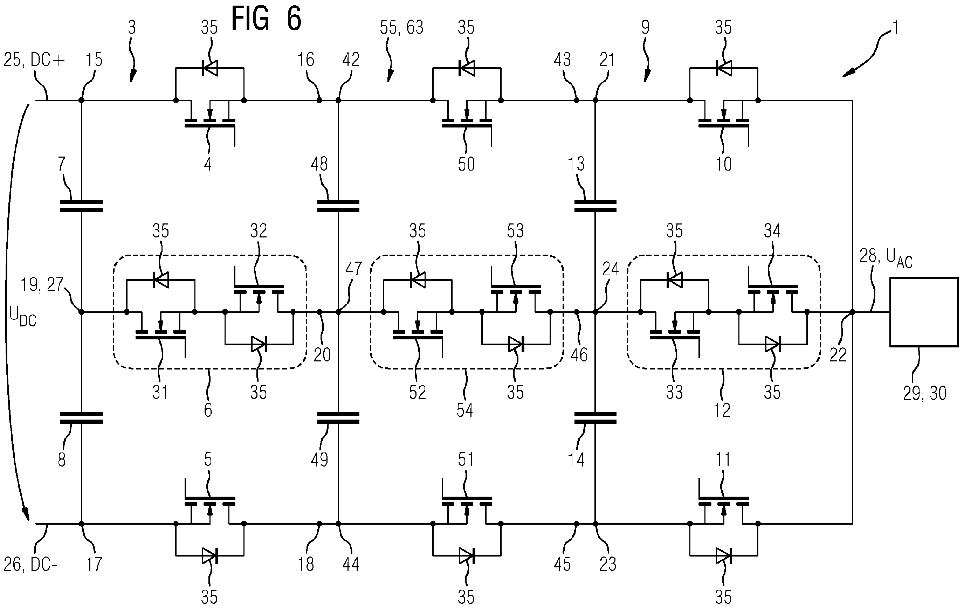

Die FIG 6 offenbart eine vierte schematische Darstellung des erfindungsgemäßen Flying Capacitor Moduls 1 auf Basis der FIG 2 zur Erzeugung von sieben Spannungslevels.

Dazu zeigt die FIG 6 in analoger Weise das Flying Capacitor Modul 1 gemäß FIG 2. Im Gegensatz zur Darstellung in FIG 2 umfasst das Flying Capacitor Modul 1 in FIG 6 zusätzlich eine erste weitere Schaltung 63 als weitere Schaltung 55 mit einem neunten und zehnten schaltbaren Halbleiter 50,51 (hier MOSFETS), einer dritten Schalteinheit 54 und einem fünften und sechsten Kondensator 7,8.

Die dritte Schalteinheit 54 umfasst, wie auch die erste und zweite Schalteinheit 6,12, zwei in Reihe verschaltete MOSFETs als einen elften und zwölften schaltbaren Halbleiter 52,53, mittels derer die dritte Schalteinheit 54 ebenfalls bidirektional betreibbar ist.

Auch hier weisen die schaltbaren Halbleiter 50,51,52,53 jeweils eine monolithisch integrierte antiparallele Diode 35 (auch body diode oder Freilaufdiode genannt) auf. Diese antiparallelen Dioden 35 werden beispielsweise für die Rückspeisung der elektrischen Energie benötigt.

Die erste weitere Schaltung 63 ist derart verschaltet, dass der neunte Halbleiter 50 zwischen einem neunten und zehnten Anschluss 42,43 und der zehnte Halbleiter 51 zwischen dem elften und zwölften Anschluss 44,45 verbunden ist, der fünfte Kondensator 48 zwischen dem neunten Anschluss 42 und einem dritten Mittelabgriff 47 verbunden ist und der sechste Kondensator 49 zwischen dem dritten Mittelabgriff 47 und dem elften Anschluss 44 verbunden ist. Die dritte Schalteinheit 54 der ersten weiteren Schaltung 63 ist dazu zwischen dem dritten Mittelabgriff 47 und dem dreizehnten Anschluss 46 verbunden.

Um eine kaskadierende Verbindung der ersten weiteren Schaltung 63 zwischen der Eingangsschaltung 3 und der Ausgangsschaltung 9 herzustellen, ist der zweite mit dem neunten Anschluss 16,42, der vierte mit dem elften Anschluss 18,44, der fünfte Anschluss 20 mit dem dritten Mittelabgriff 47, der zehnte mit dem sechsten Anschluss 43,21, der dreizehnte Anschluss 46 mit dem zweiten Mittelabgriff 24 und der zwölfte mit dem achten Anschluss 45,23 verbunden.

Am siebten Anschluss 22 der Ausgangsschaltung 9, welcher mit der ersten Wechselspannungsphase 28 des Wechselspannungsnetzes verbunden ist, ist eine sinusförmige Wechselspannung U_{AC} aus sieben Spannungslevel der Gleichspannung U_{DC} beim Betrieb des Flying Capacitor Moduls 1 erzeugbar. Mittels dieser Wechselspannung U_{AC} ist der Energieerzeuger 29 oder Energieverbraucher 30 am Flying Capacitor Modul 1 betreibbar.

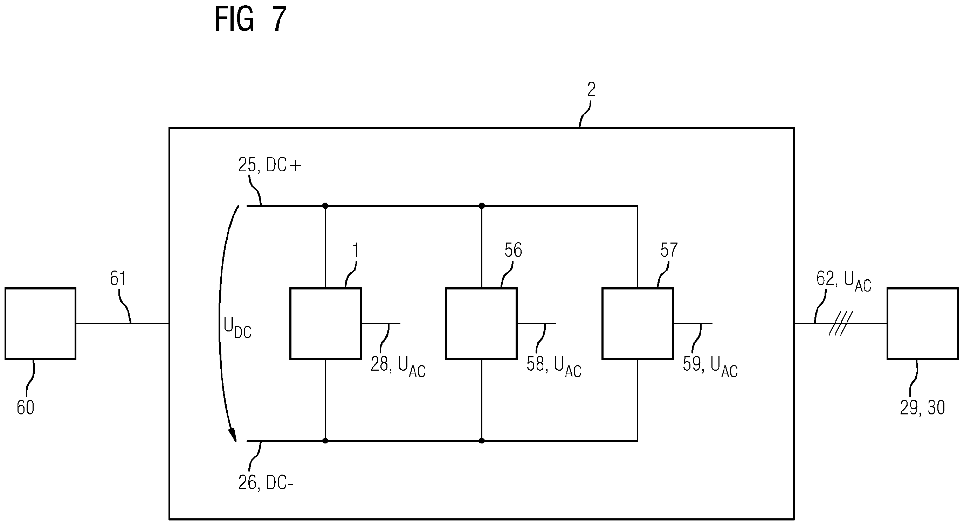

Mittels FIG 7 wird eine schematische Darstellung eines erfindungsgemäßen Multilevel-Umrichters 2 mit drei erfindungsgemäßen Flying Capacitor Modulen 1,56,57 zum dreiphasigen Betrieb eines Energieerzeugers 29 oder Energieverbrauchers 30 mittels des Multilevel-Umrichters 2 an einem Versorgungsnetz 60 aufgezeigt.

Die drei Flying Capacitor Module 1,56,57 sind jeweils über die beiden Gleichspannungsphasen 25,26 mit dem positiven Gleichspannungspotential DC+ und dem negativen Gleichspannungspotential DC- des Gleichspannungskreises verbunden.

Das Flying Capacitor Modul 1 ist mit der ersten Wechselspannungsphase 28 des Wechselspannungsnetzes, das zweite Flying Capacitor Modul 56 ist mit der zweiten Wechselspannungsphase 58 des Wechselspannungsnetzes und das dritte Flying Capacitor Modul 57 ist mit der dritten Wechselspannungsphase 59 des Wechselspannungsnetzes verbunden.

Der Energieerzeuger 29 oder der Energieverbraucher 30 ist mittels einer zweiten, hier dreiphasigen Leitung 62, welche die erste, zweite und dritte Wechselspannungsphase 28,58,59 mit der hier dreiphasigen Wechselspannung U_{AC} aufweist, mit dem Multilevel-Umrichter 2 und daher mit den drei Flying Capacitor Modulen 1,56,57 verbunden.

Die Gleichspannung U_{DC} für die drei Flying Capacitor Module 1,56,57 kann mittelbar, über einen hier nicht dargestellten Gleichrichter des Multilevel-Umrichters 2 für eine Einspeisung der Gleichspannung U_{DC} in den Gleichspannungskreis, oder kann unmittelbar von dem Versorgungsnetz 60 und einer ersten Leitung 61 als Verbindung zwischen dem Versorgungsnetz 60 und dem Multilevel-Umrichter 2 bereitgestellt werden.

Kommt ein Gleichrichter zum Einsatz, kann die erste Leitung 61 als Wechselspannungsleitung einphasig oder mehrphasig ausgebildet sein. Wird die Gleichspannung U_{DC} des Gleichspannungskreises ohne eine AC/DC-Umwandlung von dem Versorgungsnetz 60 bereitgestellt, kann die erste Leitung 61 als Gleichspannungsleitung ausgebildet sein.

Für alle schaltbaren Halbleiter der Flying Capacitor Module 1,56,57 ist insbesondere im Mulitlevel-Umrichter 2 eine Steuereinheit vorgesehen (hier nicht gezeigt), welche Ansteuersignale zum Schalten dieser schaltbaren Halbleiter generiert und entsprechend übermittelt.

## Patentansprüche

1. Flying Capacitor Modul (1) für einen Multilevel-Umrichter (2), aufweisend
- eine Eingangsschaltung (3) mit einem ersten und zweiten Halbleiter (4,5), einer ersten Schalteinheit (6) und einem ersten und zweiten Kondensator (7,8) und
- eine Ausgangsschaltung (9) mit einem dritten und vierten Halbleiter (10,11), einer zweiten Schalteinheit (12) und einem dritten und vierten Kondensator (13,14), wobei
- der erste Halbleiter (4) zwischen einem ersten und zweiten Anschluss (15,16) und der zweite Halbleiter (5) zwischen einem dritten und vierten Anschluss (17,18) verbunden ist,
- der erste Kondensator (7) zwischen dem ersten Anschluss (15) und einem ersten Mittelabgriff (19) und der zweite Kondensator (8) zwischen dem ersten Mittelabgriff (19) und dem dritten Anschluss (17) verbunden ist,
- die erste Schalteinheit (6) zwischen dem ersten Mittelabgriff (19) und einem fünften Anschluss (20) verbunden ist,
- der dritte Halbleiter (10) zwischen einem sechsten und siebten Anschluss (21,22) und der vierte Halbleiter (11) zwischen dem siebten und einem achten Anschluss (22,23) verbunden ist,
- der dritte Kondensator (13) zwischen dem sechsten Anschluss (21) und einem zweiten Mittelabgriff (24) und der vierte Kondensator (14) zwischen dem zweiten Mittelabgriff (24) und dem achten Anschluss (23) verbunden ist,
- die zweite Schalteinheit (12) zwischen dem zweiten Mittelabgriff (24) und dem siebten Anschluss (22) verbunden ist und
- der zweite mit dem sechsten Anschluss (16,21), der vierte mit dem achten Anschluss (18,23) und der fünfte Anschluss (20) mit dem zweiten Mittelabgriff (24) verbunden ist.

2. Flying Capacitor Modul (1) nach Anspruch 1, aufweisend mindestens eine weitere Schaltung (55) mit einem neunten und zehnten Halbleiter (50,51), einer dritten Schalteinheit (54) und einem fünften und sechsten Kondensator (50,51), wobei
- der neunte Halbleiter (50) zwischen einem neunten und zehnten Anschluss (42,43) und der zehnte Halbleiter (51) zwischen einem elften und zwölften Anschluss (44,45) verbunden ist,
- der fünfte Kondensator (48) zwischen dem neunten Anschluss (42) und einem dritten Mittelabgriff (47) und der sechste Kondensator (49) zwischen dem dritten Mittelabgriff (47) und dem elften Anschluss (44) verbunden ist,
- die dritte Schalteinheit (54) zwischen dem dritten Mittelabgriff (47) und einem dreizehnten Anschluss (46) verbunden ist, und
- die mindestens eine weitere Schaltung (55) zwischen der Eingangsschaltung (3) und der Ausgangsschaltung (9) verbunden ist.

3. Flying Capacitor Modul (1) nach einem der Ansprüche 1 oder 2, wobei die Halbleiter (4,5) der Eingangsschaltung (3), die Halbleiter (10,11) der Ausgangsschaltung (9) und, falls vorhanden, die Halbleiter (50,51) der mindestens einen weiteren Schaltung (55) schaltbar sind.

4. Flying Capacitor Modul (1) nach Anspruch 3, wobei die schaltbaren Halbleiter (4,5,10,11,50,51) IGBTs oder MOSFETs sind und insbesondere als GAN-Halbleiter ausgebildet sind.

5. Flying Capacitor Modul (1) nach einem der Ansprüche 1 oder 2, wobei die Halbleiter (4,5) der Eingangsschaltung (3), die Halbleiter (10,11) der Ausgangsschaltung (9) und, falls vorhanden, die Halbleiter (50,51) der mindestens einen weiteren Schaltung (55) als Dioden (38,39,40,41) ausgebildet sind.

6. Flying Capacitor Modul (1) nach einem der vorhergehenden Ansprüche, wobei die erste Schalteinheit (6), die zweite Schalteinheit (12) und, falls vorhanden, die dritte Schalteinheit (54) jeweils zwei in Reihe verschaltete schaltbare Halbleiter (31,32,33,34,52,53) aufweisen, mittels derer die Schalteinheiten (6,12,54) bidirektional betreibbar sind.

7. Flying Capacitor Modul (1) nach einem der Ansprüche 1 bis 6, wobei die erste Schalteinheit (6), die zweite Schalteinheit (12) und, falls vorhanden, die dritte Schalteinheit jeweils einen bidirektional schaltbaren monolithischen Halbleiter (36,37) aufweisen, mittels dem die Schalteinheiten (6,12) bidirektional betreibbar sind.

8. Flying Capacitor Modul (1) nach Anspruch 7, wobei die bidirektional schaltbaren, monolithischen Halbleiter (36,37) als GAN- oder SiC-Halbleiter ausgebildet sind.

9. Flying Capacitor Modul (1) nach einem der vorhergehenden Ansprüche, wobei eine Gleichspannung (U_{DC}) am ersten und dritten Anschluss (15,17) anlegbar ist und wobei mittels der schaltbaren Halbleiter (31,32,36) der ersten Schalteinheit (6), der schaltbaren Halbleiter (33,34,37) der zweiten Schalteinheit (12), der Halbleiter (4,5,38,39) der Eingangsschaltung (3) und der Halbleiter (10,11,40,41) der Ausgangsschaltung (9) auf Basis der Gleichspannung (U_{DC}) zumindest fünf Spannungslevel für eine Wechselspannung (U_{AC}) an dem siebten Anschluss (22) erzeugbar sind.

10. Flying Capacitor Modul (1) nach einem der vorhergehenden Ansprüche, wobei die maximale Sperrspannung (Uₘₐₓ) über den Halbleitern (31,32,36) der ersten Schalteinheit (6), über den Halbleitern (33,34,37) der zweiten Schalteinheit (12) und, falls vorhanden, über den Halbleitern (52,53) der dritten Schalteinheit (54) jeweils nur halb so groß ausgelegt ist, wie die maximale Sperrspannung (Uₘₐₓ) über den Halbleitern (4,5,38,39) der Eingangsschaltung (3), über den Halbleitern (10,11,40,41) der Ausgangsschaltung (9) und, falls vorhanden, über den Halbleitern (50,51) der mindestens einen weiteren Schaltung (55).

11. Multilevel-Umrichter (2) zum Betrieb eines Energieerzeugers (29) oder Energieverbrauchers (30) an einem Versorgungsnetz (60), mit einem Flying Capacitor Modul (1) nach einem der Ansprüche 1 bis 10, wobei das Flying Capacitor Modul (1)
- mit einer ersten und zweiten Gleichspannungsphase (25,26) eines Gleichspannungskreises für die Gleichspannung (U_{DC}) und mit einer ersten Wechselspannungsphase (28) eines Wechselspannungsnetzes für die Wechselspannung (U_{AC}) verbindbar ist und
- über den Gleichspannungskreis mit dem Versorgungsnetz (60) und über das Wechselspannungsnetz mit dem Energieerzeuger (29) oder dem Energieverbraucher (30) verbindbar ist.

12. Multilevel-Umrichter (2) nach Anspruch 11 mit einem jeweils als Flying Capacitor Modul (1) ausgebildeten zusätzlichen zweiten und dritten Flying Capacitor Modul (56,57), wobei
- das zweite und dritte Flying Capacitor Modul (56,57) jeweils mit der ersten und zweiten Gleichspannungsphase (25,26) des Gleichspannungskreises für die Gleichspannung (U_{DC}) verbindbar sind,
- das zweite Flying Capacitor Modul (56) mit einer zweiten Wechselspannungsphase (58) und das dritte Flying Capacitor Modul (57) mit einer dritten Wechselspannungsphase (59) des Wechselspannungsnetzes für die Wechselspannung (U_{AC}) verbindbar ist und
- das zweite und dritte Flying Capacitor Modul (56,57) jeweils über den Gleichspannungskreis mit dem Versorgungsnetz (60) und über das Wechselspannungsnetz mit dem Energieerzeuger (29) oder dem Energieverbraucher (30) verbindbar sind.
